# EUROPÄISCHE PATENTSCHRIFT

(11) **EP 1 582 459 B1**
(45) Veröffentlichungstag und Bekanntmachung des Hinweises auf die Patenterteilung: **11.03.2009**
(21) Anmeldenummer: 04028438.2
(22) Anmeldetag: 01.12.2004
(51) Int. Cl.: B64F 1/305

(54) **Fluggasttreppe oder Fluggastbrücke**
Aircraft boarding bridges and stairs
Escaliers et ponts pour l'embarquement d'avions

(30) Priorität: 02.04.2004 DE 102004016272
(43) Veröffentlichungstag der Anmeldung: 05.10.2005
(73) Patentinhaber: Hübner GmbH, 34123 Kassel (DE)
(72) Erfinder: Koch, Robert, 37242 Bad Sooden Allendorf (DE); Müller, Michael, 09326 Erlau (DE)
(74) Vertreter: Walther, Walther & Hinz GbR

(56) Entgegenhaltungen:
- EP-A1- 0 802 112
- EP-A2- 1 245 760
- DE-A1- 1 556 438
- DE-A1- 2 126 201
- DE-A1- 2 720 624
- DE-A1- 2 759 221
- DE-A1- 3 306 109
- GB-A- 1 329 107
- GB-A- 2 118 502
- US-A- 3 703 737
- US-A- 4 333 195
- US-B1- 6 418 582

## Beschreibung

Die Erfindung betrifft eine Fluggasttreppen- oder Fluggastbrückenabdichtung, umfassend einen einen Übergangsboden überspannenden Balg, wobei der Balg an seinem einen offenen Ende einen flexiblen Rahmen aufweist, und an seinem anderen Ende einen Portalrahmen zur Befestigung an der Treppe oder Brücke besitzt, wobei der flexible Rahmen bei ausgefahrenem Balg an der Außenhaut des Flugzeugs anliegt und wobei eine Betätigungs-vorrichtung für den Balg vorgesehen ist, wobei die Betätigungsvorrichtung eine drehbare mit einem Antrieb versehene Welle umfasst, wobei durch die drehbare Welle mindestens ein mit dem flexiblen Rahmen verbundenes Zugmittel auf- und abwickelbar ist.

Eine solche Vorrichtung ist bekannt aus Patentschritt GB 1 329 107, welche den nächstliegenden Stand der Technik darstellt und den Oberbegriff des Anspruchs 1 offenbart.

Fluggasttreppen oder Fluggastbrücken sind hinreichend bekannt; diese dienen dem Zugang des Flugzeugs. Derartige Flugzeugtreppen oder Fluggastbrücken besitzen einen spreizbaren Balg, der den Zwischenraum zwischen der Fluggasttreppe oder der Fluggastbrücke zum Flugzeug überbrückt, um so die das Flugzeug besteigenden Personen vor Witterungseinflüssen zu schützen. Der Balg ist im Wesentlichen U-förmig ausgebildet, wobei der Balg unten durch einen Übergangsboden abgeschlossen ist. Aus der DE 30 23 885 A1 ist eine Fluggastbrücke bekannt, die einen spreizbaren Faltenbalg aufweist. Hierbei wird der Faltenbalg von einer sogenannten Balgführung getragen, die verschieblich von der Brücke aufnehmbar ist. Auf der Führung befindet sich ein Faltenbalgzylinder, mit dem der am vorderen Ende des Balges angeordnete Rahmen im Bereich der Flugzeugöffnung an die Außenhaut des Flugzeugs angelegt wird. Dieser U-förmige und flexibel ausgestaltete Rahmen besitzt an seinem vorderen Ende einen elastisch verformbaren Wulst, auch Bumper genannt, der verhindert, dass beim Anlegen des Rahmens an die Außenhaut des Flugzeuges die Außenhaut des Flugzeuges beschädigt wird.

Aus der EP 0 277 648 A1 ist des Weiteren ein Fluggastbrückentunnel bekannt, der mit seinem vorderen Ende an die unterschiedlichen Krümmungen von Flugzeugrümpfen anpassbar ist. Hierbei ist das obere, vordere Tunnelende mittels einer Teleskopstange dem Flugzeugrumpf zu nähern und weiter in Tunnellängsrichtung nachzuschieben als das untere, vordere Tunnelende. Das dem vorderen Tunnelende abgekehrte Ende der Teleskopstange ist zwangsweise verstellbar, und zwar sowohl in horizontaler als auch in vertikaler Richtung, um durch Änderung der Neigung der Teleskopstange das obere, vordere Tunnelende an unterschiedliche Flugzeugrumpfkonturen anlegen zu können.

Aus der DE 33 06 109 C2 ist eine Fluggastbrückenabdichtung mit einem Faltenbalg bekannt. Der Faltenbalg zeigt an seinem vorderen Ende einen entsprechend der Kontur des Balges ausgebildeten flexiblen Rahmen. Der Rahmen besitzt an seiner Vorderseite einen umlaufenden Wulst, um bei Anlage des Rahmens an der Flugzeugaußenhaut eine Beschädigung der Flugzeugaußenhaut zu verhindern. Beim Auseinanderfahren oder Spreizen des Balges ist jeweils ein seitliches Scherengestell vorgesehen. Dieses Scherengestell umfasst einen ersten federbelasteten Teleskopfederstab, wobei der erste federbelastete Teleskopfederstab einen zweiten federbelasteten Teleskopfederstab aufweist, der endseitig mit dem Rahmen des Balges verbunden ist. Dieser zweite Teleskopfederstab ist gelenkig an dem ersten Teleskopfederstab gelagert, wobei zwischen dem ersten und dem zweiten Teleskopfederstab ein Verbindungsglied vorgesehen ist, das mit der Feder des ersten Teleskopfederstabs in Verbindung steht. Die Feder des ersten Teleskopfederstabs sorgt für eine Spreizung des zweiten Teleskopfederstabs relativ zum ersten Teleskopfederstab, um ein Anlegen des flexiblen Rahmens mit dem frontseitig angeordneten Bumper an die Flugzeughülle zu ermöglichen. Um nunmehr ein Auseinanderfahren bzw. auch ein Zusammenfahren des Balges zu ermöglichen, ist eine Seilführung vorgesehen. Diese Seilführung umfasst einen Motor, von dem das Seil aufnehmbar ist. Im zusammengefahrenen Zustand des Balges steht die Feder des ersten Teleskopfederstabs unter Spannung. Wird nun vom Motor Seil abgelassen, dann wird durch die Spannung der Feder in dem ersten Teleskopfederstab der zweite Teleskopfederstab durch das Verbindungsglied relativ zum ersten Teleskopfederstab verschwenkt oder auch gespreizt, so dass sich der Rahmen an die Flugzeughülle anlegen kann. Um zu verhindern, dass das Seil durchhängt, ist eine federbelastete Spannrolle vorgesehen.

Neuere Flugzeugtypen besitzen eine extrem konturierte Außenhaut; insbesondere im Übergangsbereich zum Flugzeugbug ist der Rumpf des Flugzeugs teilweise extrem abgewinkelt, so dass mit herkömmlichen Fluggasttreppen oder Fluggastbrücken eine konturgenaue Anlage des am vorderen Ende des Balges angeordneten Rahmens an der Flugzeughülle nicht gewährleistet ist. Das heißt, es entstehen Spalte, die nicht nur den in das Flugzeug einsteigenden Passagier der Witterung aussetzen, sondern darüber hinaus auch bewirken, dass bei Regen oder Schnee Feuchtigkeit in das Innere des Flugzeugs eindringt.

Der Erfindung liegt daher die Aufgabe zugrunde, eine Fluggasttreppen- oder Fluggastbrückenabdichtung der eingangs genannten Art bereitzustellen, mit der auf einfache und preiswerte Weise auch der Eingangsbereich stark konturierter Flugzeugrümpfe sicher gegen Witterungseinflüsse abgedichtet werden kann.

Die Aufgabe wird erfindungsgemäß dadurch gelöst, dass die Betätigungsvorrichtung mindestens zwei beabstandet zueinander angeordnete Gelenkarme aufweist, wobei jeder Gelenkarm einen Oberarm und einen damit durch ein Scharnier verbundenen Unterarm aufweist, wobei der Oberarm des Gelenkarms im Dachbereich des Balges gelenkig am Portalrahmen und der Unterarm gelenkig am flexiblen Rahmen befestigt ist, und wobei Spreizmittel zum Spreizen des Balges vorgesehen sind. Insbesondere durch die spezielle Ausbildung der beiden Gelenkarme ist es möglich, den am vorderen Ende des Balges angeordneten insbesondere U-förmigen Rahmen im Wesentlichen spaltfrei an die Flugzeugaußenhaut eines Flugzeugs im Bereich der Zugangstür anzulegen, selbst wenn der Flugzeugrumpf durch eine starke Abknickung zum Bug hin gekennzeichnet ist.

Vorteilhafte Merkmale und Ausbildungen sind den Unteransprüchen zu entnehmen.

So ist insbesondere vorgesehen, dass der flexible Rahmen aus einem glasfaserverstärkten Kunststoff hergestellt ist. Nach dem Stand der Technik wurde für die Herstellung des Rahmens bislang ein Federstahl verwendet. Solcher Federstahl ist zwar in gewissem Umfange elastisch nachgiebig, jedoch sind der Elastizität Grenzen gesetzt. Es hat sich herausgestellt, dass ein aus glasfaserverstärktem Kunststoff hergestellter Rahmen den gestellten Anforderungen hinsichtlich seiner Elastizität wesentlich besser entspricht.

Vorteilhaft sind jedem Gelenkarm Spreizmittel zugeordnet, die ein gleichmäßiges Spreizen des Balges über seine Länge bewirken.

Das Spreizmittel selbst weist nach einem weiteren vorteilhaften Merkmal der Erfindung mindestens eine Kolbenzylindereinheit zum Spreizen des Gelenkarmes auf, wobei die Kolbenzylindereinheit auch als Gasdruckfeder- oder aber auch als federbelastete Teleskopstange ausgebildet sein kann. Nach einem weiteren Merkmal der Erfindung ist eine erste Kolbenzylindereinheit zur Spreizung des Unterarmes relativ zum Oberarm vorgesehen, um den Balg an die Flugzeugaußenhaut im oberen Bereich des Rahmens, also im Bereich des Daches des Balges, an die Flugzeughaut zu pressen. Hierzu ist die erste Kolbenzylindereinheit mit ihrem einen Ende gelenkig am Oberarm und mit ihrem anderen Ende gelenkig am Unterarm befestigt.

Eine zweite Kolbenzylindereinheit dient vorteilhaft dem Ausschwenken des Oberarmes; diese zweite Kolbenzylindereinheit ist hierbei mit ihrem einen Ende gelenkig am Portalrahmen und mit ihrem anderen Ende gelenkig am Oberarm befestigt und sorgt so dafür, dass der Rahmen nicht aufgrund seines Eigengewichtes absackt, das heißt, diese Kolbenzylindereinheit hält schlussendlich den flexiblen Rahmen und damit den Balg im ausgefahrenen Zustand des Balges hoch.

Um bei Flugzeugrümpfen, deren Übergang vom Wandbereich zum Deckenbereich flach verläuft, eine gute Abdichtung auch im Dachbereich mit Hilfe der erfindungsgemäßen Fluggasttreppen- oder Fluggastbrückenabdichtung bereitzustellen, ist nach einem besonderen Merkmal der Erfindung vorgesehen, dass der Unterarm ein Endglied aufweist, das abgewinkelt an dem Unterarm befestigt ist. Der Winkel auf der Unterseite zwischen dem Unterarm und dem Endglied beträgt wesentlich weniger als 180 °, also beispielsweise 130° oder 140°, um eben - wie bereits ausgeführt -den flexiblen Rahmen möglichst spaltfrei an dem Flugzeugrumpf anzulegen.

Wie bereits eingangs erläutert, umfasst die Betätigungsvorrichtung eine mit einem Antrieb versehene drehbare Welle. Durch die drehbare Welle ist ein mit dem flexiblen Rahmen verbundenes Zugmittel auf- und abwickelbar. Insofern ist erfindungsgemäß vorgesehen, dass die drehbare Welle eine Wickelvorrichtung für das Zugmittel, z. B. einen Gurt aufweist, um ein sauberes Auf- bzw. auch Ablaufen des Gurtes zu ermöglichen. Des Weiteren soll die Wickelvorrichtung derart ausgebildet sein, dass das Zugmittel, also beispielsweise ein Gurt, in keinem Fall durchhängt, sondern immer unter einer bestimmten Spannung steht.

Insofern ist nach einem besonderen Merkmal der Erfindung vorgesehen, dass die Wickelvorrichtung einen Federspeicher und eine damit verbundene Gurtscheibe aufweist. Der Federspeicher bewirkt Folgendes. Wie bereits an anderer Stelle erläutert, ist der Flugzeugrumpf zum Bug hin gegenüber dem übrigen Rumpf stark abgekrümmt. Das heißt, dass der Balg zum vorderen Bereich des Flugzeuges hin stärker gespreizt werden muss, als zum hinteren Teil des Flugzeuges. Das bedeutet allerdings auch, dass durch die Welle im vorderen Bereich mehr Gurt abgewickelt wird als im hinteren Bereich. Da die Welle sowohl den Gurt für den vorderen als auch für den hinteren Bereich aufnimmt, mithin jedem Gelenkarm ein Gurt zugeordnet ist, würde dies dazu führen, dass der Gurt im hinteren Bereich in der gespreizten Stellung des Balges durchhängt. Ein solches Durchhängen des Gurtes wird im Einzelnen dadurch verhindert, dass der Federspeicher eine radial gesehen innere Hülse und eine äußere Hülse aufweist, wobei die innere Hülse mit der Welle zu verbinden ist, hingegen die äußere Hülse mit der Gurtscheibe gekoppelt ist, wobei die Gurtscheibe relativ zu der Welle verdrehbar ist. Im zusammengefahrenen Zustand des Balges ist der Federspeicher gespannt. Beginnt nun die Welle zu rotieren mit der Folge, dass der Gurt von der Gurtscheibe abgewickelt wird, dann geschieht dies im Einzelnen dadurch, dass das Gehäuse des Federspeichers, der mit der Welle verbunden ist, ebenfalls mit der Gurtscheibe gekoppelt ist. Im Einzelnen ist das äußere Gehäuseteil mit der Gurtscheibe verbunden, wohingegen das innere Gehäuseteil des Federspeichers fest auf der Welle aufsitzt. Zwischen den beiden Gehäuseteilen befindet sich die Feder, z. B. eine Spiralfeder. Das eine Ende der Feder ist mit der einen, das andere Ende mit der anderen Hülse verbunden.

Liegt nun der flexible Rahmen des Balges im Zuständigkeitsbereich dieser einen ersten Wickelvorrichtung an der Außenhaut des Flugzeugs an, dreht jedoch die Welle weiter, weil der Rahmen im Bereich der zweiten Wickelvorrichtung keinen Kontakt zur Außenhaut des Flugzeuges hat, dann entspannt sich bei weiterer Drehung der Welle der Federspeicher. Hieraus wird deutlich, dass dann die Gurtscheibe selbst still steht, mithin kein weiteres Gurtmaterial mehr nachgelassen wird. Beim Einfahren des Balges hingegen wird zunächst der Federspeicher gespannt, das heißt, die Feder im Federspeicher wird vorgespannt, wobei nach Erreichen der maximalen Vorspannung der Feder des Federspeichers dann die Gurtscheibe mitgenommen wird, mithin der Gurt wieder aufgewickelt wird.

Wie bereits eingangs erläutert, umspannt der U-förmig ausgebildete Balg einen Übergangsboden. Ein Übergangsboden nach dem Stand der Technik umfasst ein auf eine Rampe verschieblich gelagertes Bodenblech, wobei das Bodenblech in Richtung des Balgausschubes federbelastet ist. Das heißt, dass das Bodenblech beim Anstoßen an die Flugzeughülle entgegen der Kraft der Feder zurückweicht, so dass sichergestellt ist, dass das Bodenblech tatsächlich spaltfrei an dem Rumpf des Flugzeugs anliegt.

Nachteilig hierbei ist, dass dieses Bodenblech eine nicht unerhebliche Länge aufweist; d. h. die maximale Länge des zusammengezogenen Balges ist bestimmt durch die Länge des Bodenblechs. Somit ist das Ziel der Erfindung, hier Abhilfe zu schaffen.

Insofern wird erfindungsgemäß vorgeschlagen, dass der Übergangsboden mehrere miteinander verbundene, geführte Bodenlamellen oder Bodenglieder aufweist. Zur Führung der Bodenlamellen sind mindestens ein, vorzugsweise jedoch zwei Führungselemente in Form von Führungsstangen vorgesehen, die den Portalrahmen mit der vorderen Bodenlamelle verbinden, wobei die Bodenlamellen selbst Ösen zur Aufnahme durch die beidseitig parallel zur Längsachse des Balges angeordnete Führungsstangen aufweisen. Um zu gewährleisten, dass beim Ausziehen des Übergangsbodens, mithin einer Verschiebung der Bodenlamellen in Längsrichtung des Balges, keine Spalte zwischen den einzelnen Bodenlamellen entstehen, ist vorteilhaft vorgesehen, dass die Bodenlamellen im Bereich ihrer Längskanten Mitnehmer aufweisen, um die Bodenlamellen zur Bildung des Übergangsbodens bei Spreizung des Balges ziehharmonikaförmig auseinanderziehen zu können. Hieraus wird deutlich, dass die einander überlappenden Lamellen an ihren Längskanten jeweils eine nach unten bzw. nach oben ausgerichtete Abkantung aufweisen können, mithin die Bodenlamellen hakenförmig ineinander greifen.

Unterhalb der Bodenlamellen ist nach einem weiteren Merkmal der Erfindung eine Stabilisierungseinrichtung angeordnet, um ein endseitiges Herunterhängen des Übergangsbodens zu verhindern. Die Stabilisierungs-einrichtung umfasst vorteilhaft zwei kreuzweise angeordnete Arme, die einerseits an der vorderen Bodenlamelle und andererseits am Portalrahmen jeweils gelenkig angeordnet sind.

Nach einem weiteren vorteilhaften Merkmal der Erfindung ist vorgesehen, dass die Stabilisierungseinrichtung durch eine Kolbenzylindereinheit in Spreizstellung bringbar ist. Hierzu ist im Einzelnen konstruktiv jedem Arm der Stabilisierungseinrichtung ein Kolbenzylinderantrieb in Form einer Gasdruckfeder oder einer Teleskopfederstange zugeordnet, die dafür sorgen, dass die Arme eine Spreizstellung einnehmen, mithin die Bodenlamellen einen ausgefahrenen Zustand einnehmen. Denkbar ist in diesem Zusammenhang allerdings auch, die vordere Bodenlamelle als die Bodenlamelle, die sich in unmittelbarer Nachbarschaft zur Außenhaut des Flugzeugs befindet, durch eine Kolbenzylindereinheit mit dem Portalrahmen zu verbinden. In diesem Fall wären lediglich die seitlichen Führungselemente stabiler auszubilden, um ein Durchhängen oder Durchbiegen zu verhindern.

Nach einem weiteren vorteilhaften Merkmal ist vorgesehen, dass die vordere Bodenlamelle über ihre Länge elastisch verformbar ausgebildet ist, um sich der Kontur des Flugzeugrumpfes anpassen zu können. Um eine Beschädigung des Flugzeugrumpfes durch die vordere Bodenlamelle oder das Bodenglied zu vermeiden, zeigt auch die Bodenlamelle stirnseitig, ganz ähnlich wie der flexible Rahmen, einen elastisch nachgiebigen Puffer, zum Beispiel aus Schaumgummi.

Ein weiteres vorteilhaftes Merkmal der Erfindung besteht in der Anbindung des Wulstes, auch Bumper genannt, an dem flexiblen Rahmen und der Stirnseite der vorderen Bodenlamelle. Nach dem Stand der Technik war es bislang so, dass der Bumper durch Schrauben oder Nieten an dem flexiblen Rahmen befestigt wurde. Insbesondere der Austausch des Bumpers war von einem erheblichen Aufwand gekennzeichnet. In diesem Zusammenhang liegt der Erfindung die Aufgabe zugrunde, Mittel bereit zu stellen, die einen leichten Austausch des Bumpers ermöglichen, wobei aber dennoch gewährleistet ist, dass der Bumper sicher von dem flexiblen Rahmen bzw. auch der vorderen Bodenlamelle aufgenommen wird. Eine solche stabile aber dennoch leicht lösbare Verbindung des Puffers oder Bumpers mit dem flexiblen Rahmen bzw. der vorderen Bodenlamelle wird durch die Verwendung von Haft- und Flauschband ermöglicht.

Anhand der Zeichnungen wird die Erfindung nachstehend beispielhaft näher erläutert:
- Figur 1: zeigt die Fluggasttreppen- oder Fluggastbrückenabdichtung in einer perspektivischen Ansicht;
- Figur 2: zeigt eine Seitenansicht;
- Figur 3: zeigt eine Ansicht gemäß Figur 1, wobei jedoch der Faltenbalg weggelassen ist;
- Figur 4: zeigt eine Ansicht gemäß Figur 2 ebenfalls ohne Faltenbalg;
- Figur 5: zeigt eine Ansicht von unten, wobei ebenfalls der Faltenbalg weggelassen ist;
- Figur 5a: zeigt schematisch die Verbindung der einzelnen Bodehlamellen untereinander;
- Figur 6: zeigt die Wickelvorrichtung mit Federspeicher und Gurtscheibe.

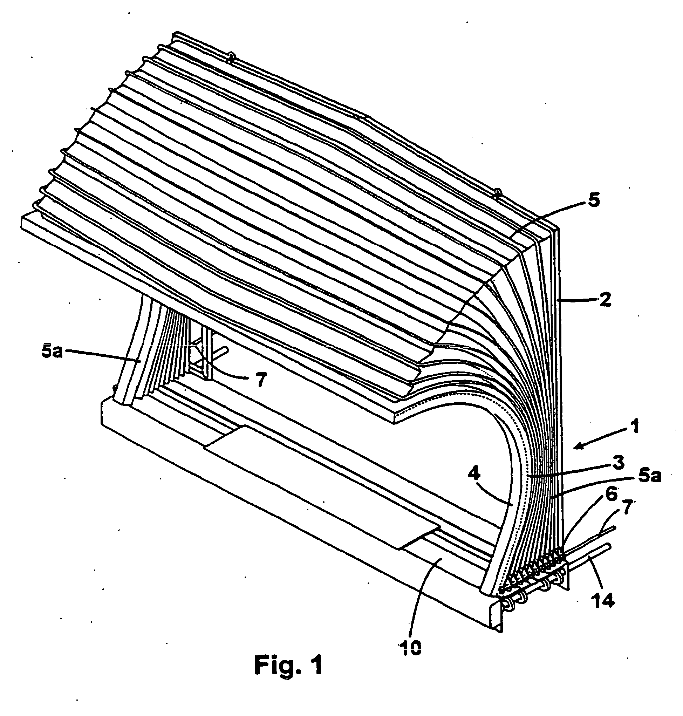

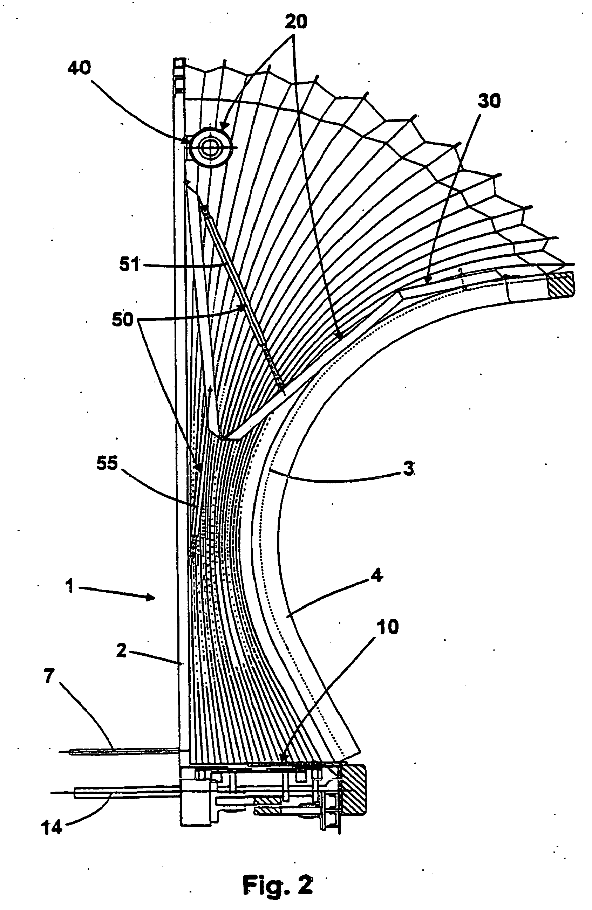

Die Fluggasttreppen- oder Fluggastbrückenabdichtung 1 umfasst gemäß Figur 1 und Figur 2 den Portalrahmen 2 und den flexiblen Rahmen 3, der endseitig den Bumper 4 aus elastisch nachgiebigem Material, wie z. B. Schaumgummi, aufnimmt. Zwischen dem Portalrahmen einerseits und dem flexiblen Rahmen 3 andererseits ist der Faltenbalg 5 aufgespannt. Der Faltenbalg 5 ist in seiner Kontur ebenso wie der flexible Rahmen 3 und auch der Portalrahmen 2 nach Art eines U ausgebildet und überspannt den insgesamt mit 10 bezeichneten Übergangsboden. Im Bodenbereich der beiden Schenkel 5a des Balges 5 besitzt der Balg mehrere hintereinander angeordnete Balgösen 6, die von der Führungsschiene 7 aufgenommen werden, wobei die Führungsschiene 7 endseitig zum Einen an dem flexiblen Rahmen 3 und zum Anderen an der Fluggasttreppe bzw. der Fluggastbrücke selbst oder dem Portalrahmen 2 befestigt ist. Aus der Darstellung gemäß Figur 2 ist zum Einen die Betätigungseinrichtung 20, umfassend die beiden beabstandeten Gelenkarme 30 und die drehbare Welle 40, sowie die Spreizeinrichtung 50, umfassend die beiden Kolbenzylindereinheiten 51 und 55 erkennbar, wobei eine solche Spreizeinrichtung 50 jedem Gelenkarm zugeordnet ist.

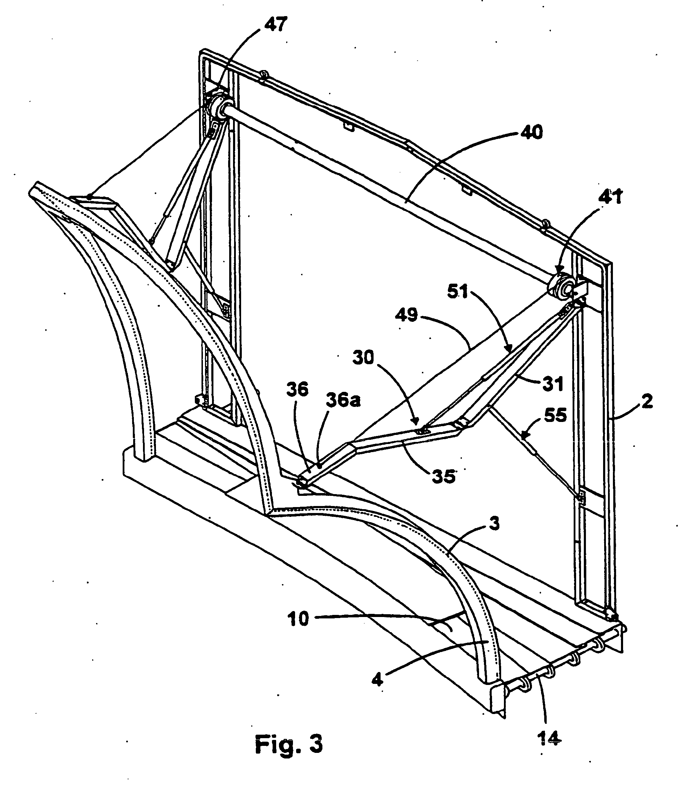

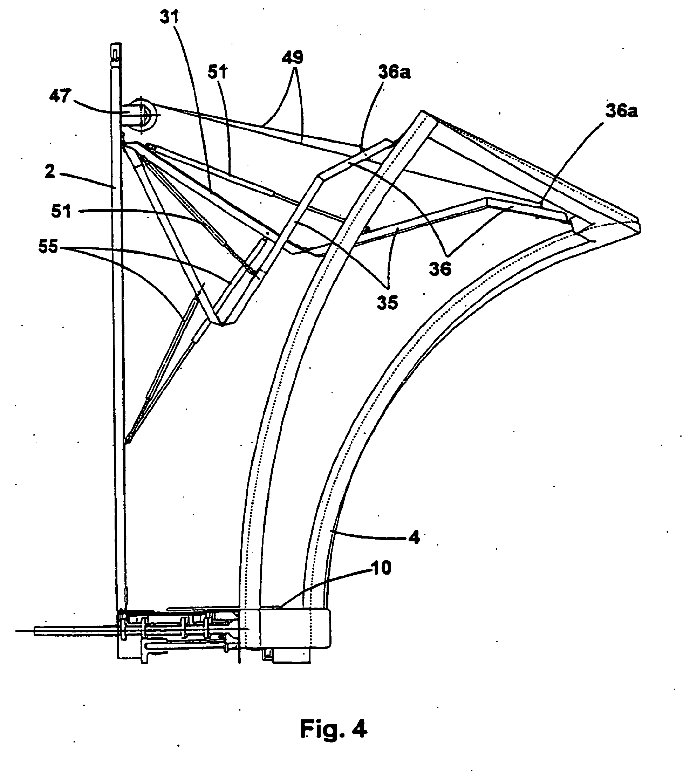

Für die folgenden Ausführungen wird auf die Figuren 3 und 4 verwiesen. Der insgesamt mit 30 bezeichnete Gelenkarm ― ein solcher ist im Bereich eines jeden Schenkels 5a des Balges 5 im Deckenbereich des Balges angeordnet - umfasst den gelenkig mit dem Portalrahmen 2 verbundenen Oberarm 31 und den am Oberarm 31 ebenfalls gelenkig angeordneten Unterarm 35. Sowohl der Unterarm 31 als auch der Oberarm 35 sind durch die erste Kolbenzylindereinheit 51 miteinander verbunden, wobei die erste Kolbenzylindereinheit jeweils gelenkig am Ober- und am Unterarm angeordnet ist. Die Kolbenzylindereinheit 51 kann als Gasdruckfeder oder auch als Teleskopfederstab ausgebildet sein.

Die zweite Kolbenzylindereinheit besitzt das Bezugszeichen 55, wobei diese Kolbenzylindereinheit 55, die ebenfalls als Gasdruckfeder oder aber als Teleskopfederstab ausgebildet sein kann, gelenkig mit dem Portalrahmen 2 und auch gelenkig mit dem Oberarm 31 verbunden ist. Der Unterarm 35 zeigt endseitig das mit 36 bezeichnete Endglied, das endseitig ebenfalls gelenkig mit dem flexiblen Rahmen 3 verbunden ist.

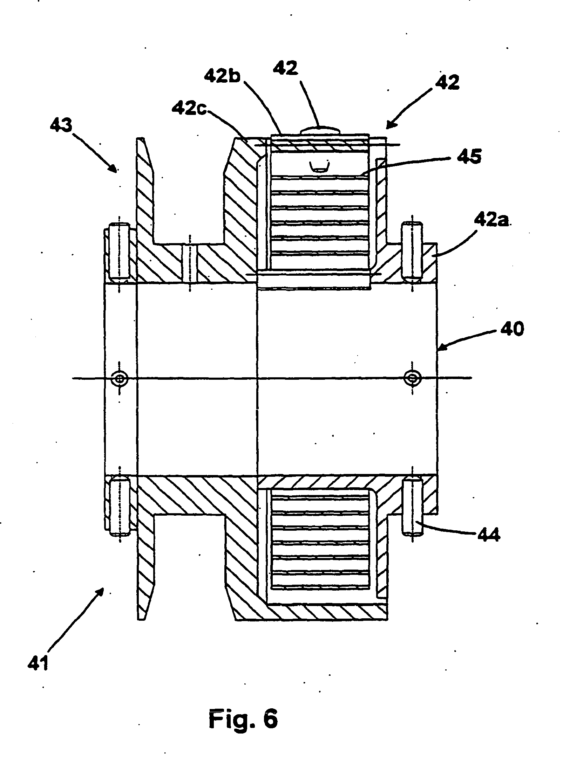

Zur Betätigung des Gelenkarmes 30 sind die beiden Kolbenzylindereinheiten 51 und 55 vorgesehen. Diese z. B. als Gasdruckfedern ausgebildeten Kolbenzylindereinheiten 51 und 55 bewirken ein Ausschwenken des flexiblen Rahmens 3 mit dem Spreizen des Balges 5 entsprechend der Figur 3. Auf der motorbetriebenen Welle befinden sich jedem Gelenkarm zugeordnet zwei Wickelvorrichtungen 41. Die Ausbildung der Wickelvorrichtung 41 ergibt sich aus Figur 6. Hierbei ist zunächst einmal ein Federspeicher 42 und eine mit dem Federspeicher unmittelbar verbundene Gurtscheibe 43 erkennbar. Die Gurtscheibe 43, die den als Zugmittel ausgebildeten Gurt 49 aufnimmt (Figur 3), ist nicht mit der Welle 40 verbunden, sondern ist vielmehr relativ zu dieser verdrehbar. Mit der Welle 40 verbunden hingegen ist der Federspeicher 42. Der Federspeicher 42 umfasst ein inneres Gehäuseteil 42a und ein äußeres Gehäuseteil 42b, wobei das obere Gehäuseteil 42b durch die Schraube 42c mit der Gurtscheibe 43 verbunden ist, wie dies bereits erläutert wurde. Das durch die beiden Gehäuseteile 42a, 42b gebildete Gehäuse 42 nimmt die insgesamt mit 45 bezeichnete spiralförmig gebogene Blattfeder auf. Die Enden der Feder sind einerseits mit dem inneren Gehäuseteil 42a und andererseits mit dem äußeren Gehäuseteil 42b verbunden. Das untere Gehäuseteil 42a sitzt fest auf der Welle 40 auf. Die Verbindung des unteren Gehäuseteils 42 mit der Welle 40 erfolgt durch die Madenschrauben 44.

Die Funktionsweise des Federspeichers stellt sich nun wie folgt dar. Im eingefahrenen Zustand des Balges ist die Feder 45 gespannt. Bei Drehung der Welle 40 durch den Motor 47 wird der Gurt 49, der an dem Haken 36a des Endgliedes 36 befestigt ist, von der Gurtscheibe 43 abgespult. Liegt der flexible Rahmen 3 mit dem Bumper 4 nunmehr im Bereich des einen Gelenkarmes an der Außenhaut des Flugzeugs an, der Rahmen 3 im Bereich des anderen Gelenkarmes jedoch nicht, dann dreht sich zunächst die Welle 40 weiter. Um nun zu verhindern, dass das Gurtband 99 der Wickelvorrichtung 41, die dem einen Gelenkarm zugeordnet ist, dessen Ende mit dem Teil des Rahmens verbunden ist, der bereits an dem Flugzeug anliegt (Figur 3), durchhängt, dreht nun der Federspeicher weiter, entspannt hierbei die Feder 45, und verhindert auf diese Weise, dass der Gurt 49 durchhängt. Die Vorspannung der Feder ist derart gewählt, dass diese in jedem Fall genügend Speicherkapazität hat, um die Anzahl von Drehungen der Welle 40 aufzufangen, die der andere Gelenkarm benötigt, um an der Außenhaut des Flugzeugs anzuliegen.

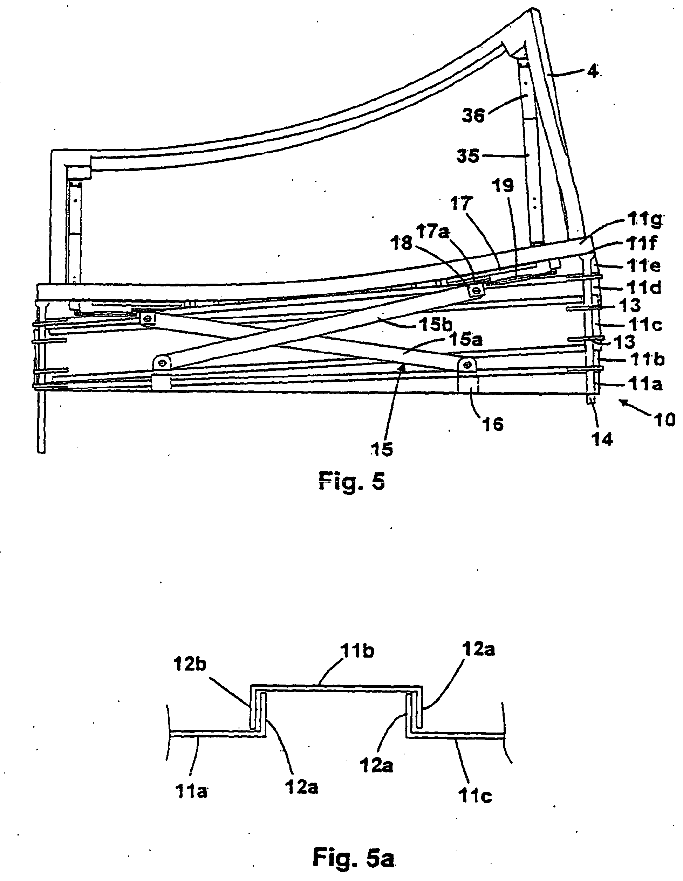

Gegenstand der Erfindung ist ebenfalls der Übergangsboden 10. Der Übergangsboden 10 umfasst mehrere Bodenlamellen 11 a und 11 e, die die jeweils endseitigen Kanten 12a bis 12b zeigen (Figur 5a), mit welchem diese Bodenlamellen 11a bis 11e miteinander in Verbindung stehen. Darüber hinaus zeigt jede Bodenlamelle 11 a bis 11e endseitig Ösen 13, wobei die Ösen 13 der Aufnahme der mit 14 bezeichneten Führungsstange dienen. Unterhalb des Übergangsbodens 10 befindet sich die Stabilisierungseinrichtung 15. Die mit 15 bezeichnete Stabilisierungseinrichtung umfasst zwei Arme 15a und 15b, wobei die Arme 15a, 15b durch Gelenkböcke 16 an der Bodenlamelle 11 a befestigt sind, wohingegen die vordere Bodenlamelle 11e eine Schlittenführung 17 zur Aufnahme eines Schlittens 17a für einen weiteren Gelenkbock 18 zeigt, der - wie bereits ausgeführt - das andere Ende des jeweiligen Armes 15a, 15b aufnimmt. Der Schlitten 17a steht unter der Kraft einer Kolbenzylindereinheit 19, die sich ebenfalls gelenkig an der entsprechenden Bodenlamelle 11 abstützt. Die Kolbenzylindereinheit 19 kann als Gasdruckfeder oder aber als Teleskopfederstab ausgebildet sein. Durch die beiden Kolbenzylindereinheiten 19 wird der Übergangsboden 10, bestehend aus den einzelnen Bodenlamellen 11 bis 11e, in gespreizter Stellung gehalten, wie dies aus Figur 5 erkennbar ist.

Die vordere Bodenlamelle 11e weist darüber hinaus eine Stirnplatte 11f auf, an der der Wulst 11g befestigt ist (Figur 5). Die Stirnplatte 11f ist lediglich an den Enden der Bodenlamelle 11 e befestigt, so dass bei entsprechend flexibler Gestaltung und Anordnung des Materials der Stirnplatte 11f diese in der Lage ist, sich elastisch zu verformen. Dies ist dann der Fall, wenn der Wulst 11 g, der die Bodenlamelle in Richtung auf die Öffnung zu überragt, in Kontakt mit der Flugzeughülle gelangt und sich dementsprechend die Stirnplatte 11f der Hülle des Flugzeugs anpassen kann. Die Anordnung der Stirnplatte 11f an der Bodenlamelle 11 e kann so getroffen sein, dass die Stirnplatte an der vorderen Kante unter der Bodenlamelle lediglich an den Enden mit der Bodenlamelle, z. B. durch Schweißung oder Klebung, verbunden ist, so dass die Stirnplatte 11f über ihre Länge bogenförmig verformbar ist.

## Patentansprüche

1. Fluggasttreppen- oder Fluggastbrückenabdichtung, umfassend einen einen Übergangsboden (10) überspannenden Balg (5), wobei der Balg an seinem einen offenen Ende einen flexiblen Rahmen (3) aufweist und an seinem anderen Ende an einem Portalrahmen (2) zur Befestigung an der Fluggasttreppe oder der Fluggastbrücke angeordnet ist, wobei der flexible Rahmen (3) bei ausgefahrenem Balg an der Außenhaut des Flugzeugs anliegt, und wobei eine Betätigungsvorrichtung (20) für den Balg (5) vorgesehen ist, um den Balg (5) zu spreizen und zusammenzuziehen, wobei die Betätigungsvorrichtung (20) eine drehbare, mit einem Antrieb versehene Welle (40) umfasst, wobei durch die drehbare Welle (40) mindestens ein mit dem flexiblen Rahmen verbundenes Zugmittel auf- und abwickelbar ist,
wobei die Betätigungsvorrichtung (20) zwei beabstandet zueinander angeordnete Gelenkarme (30) aufweist, wobei jeder Gelenkarm (30) einen Oberarm (31) und einen damit durch ein Scharnier verbundenen Unterarm (35) aufweist, wobei der Oberarm (31) des Gelenkarms (30) im Dachbereich des Balgs (5) gelenkig an dem Portalrahmen (2) und der Unterarm (35) an dem flexiblen Rahmen (3) befestigt ist, und wobei eine Spreizeinrichtung (51, 55) zum Spreizen des Balgs (5) vorgesehen ist, wobei der Unterarm (35) an dem flexiblen Rahmen (3) gelenkig befestigt ist,
**dadurch gekennzeichnet,**
**dass** die Spreizeinrichtung eine erste und zweite Kolbenzylindereinheit (51, 55) zum Spreizen des Gelenkarms (30) umfasst, wobei die eine erste Kolbenzylindereinheit (51) der Spreizung des Unterarms (35) relativ zum Oberarm (31) dient, wobei die eine erste Kolbenzylindereinheit (51) mit ihrem einen Ende gelenkig am Oberarm (31) und mit ihrem anderen Ende gelenkig am Unterarm (35) befestigt ist, wobei die zweite Kolbenzylindereinheit (55) dem Ausschwenken des Oberarms (35) dient.

2. Abdichtung nach Anspruch 1,
**dadurch gekennzeichnet,**
**dass** der flexible Rahmen (3) aus einem glasfaserverstärkten Kunststoff hergestellt ist.

3. Abdichtung nach Anspruch 1,
**dadurch gekennzeichnet,**
**dass** die zweite Kolbenzylindereinheit (55) mit ihrem einen Ende gelenkig am Portalrahmen (2) und mit ihrem anderen Ende gelenkig am Oberarm (31) befestigt ist.

4. Abdichtung nach Anspruch 1,
**dadurch gekennzeichnet,**
**dass** der Unterarm (35) ein Endglied (36) aufweist, das abgewinkelt an dem Unterarm (35) befestigt ist.

5. Abdichtung nach Anspruch 1,
**dadurch gekennzeichnet,**
**dass** die drehbare Welle (40) eine Wickelvorrichtung (41) für das Zugmittel (49), z. B. einen Gurt, aufweist.

## Claims

1. A seal for aircraft boarding stairs or for an aircraft boarding bridge, said seal comprising a bellows (5) that spans a gangway bottom plate (10), said bellows comprising a flexible frame (3) at its one open end and having at its other end a gantry frame (2) intended to be fastened to the aircraft boarding stairs or to the aircraft boarding bridge, said flexible frame (3) resting against the outer skin of the aircraft when the bellows is deployed and an actuation device (20) for actuating the bellows (5) being provided for extending and retracting the bellows (5), said actuation device (20) comprising a rotatable shaft (40) equipped with a drive, said rotatable shaft (40) permitting to wind and unwind a traction means connected to the flexible frame, said actuation device (20) comprising two articulated arms (30) arranged in a spaced-apart relationship, each articulated arm (30) comprising an upper arm member (31) and a lower arm member (35) coupled to said upper arm member by a hinge, said upper arm member (31) of the articulated arm (30) being hinged to the gantry frame (2) in the roof region of the bellows (5) and the lower arm member (35) being hinged to the flexible frame (3), extension means (51, 55) being provided for extending the bellows (5), said lower arm (35) being hinged to said flexible frame (3),
**characterized in**
**that** the extension means includes a first and a second piston and cylinder unit (51, 55) for extending the articulated arm (30), the one first piston and cylinder unit (51) serving to extend the lower arm member (35) relative to the upper arm member (31), the one first piston and cylinder unit (51) being hinged at its one end to the upper arm member (31) and at its other end to the lower arm member (35), the second piston and cylinder unit (55) serving to swing out the upper arm member (35).

2. The seal according to claim 1,
**characterized in**
**that** the flexible frame (3) is made from a glass fiber reinforced plastic material.

3. The seal according to claim 1,
**characterized in**
**that** the second piston and cylinder unit (55) is hinged at its one end to the gantry frame (2) and at its other end to the upper arm member (31).

4. The seal according to claim 1,
**characterized in**
**that** the lower arm member (35) comprises an end link (36) that is fastened to the lower arm member (35) so as to be inclined at an angle therewith.

5. The seal according to claim 1,
**characterized in**
**that** the rotatable shaft (40) comprises a winding device (41) for the traction means (49), e.g., a belt.

## Revendications

1. Joint pour escalier ou passerelle d'embarquement/débarquement de passagers d'un avion, du type comprenant un soufflet (5) enjambant une passerelle d'intercirculation (10), le soufflet comportant un cadre (3) flexible à l'une de ses extrémités, qui est ouverte, et étant disposé à son autre extrémité sur un cadre portique (2) pour être fixé sur l'escalier ou la passerelle d'embarquement/débarquement de passagers d'un avion, le cadre flexible (3) reposant contre la peau extérieure de l'avion lorsque le soufflet est déployé et un dispositif d'actionnement (20) du soufflet (5) étant prévu pour étirer et contracter le soufflet (5), le dispositif d'actionnement (20) comprenant un arbre (40) mobile en rotation pourvu d'un entraînement, un moyen de traction relié au cadre flexible étant adapté à être enroulé et déroulé par l'arbre (40) mobile en rotation, le dispositif d'actionnement (20) comportant deux bras articulés (30) disposés avec un écartement entre eux, chaque bras articulé (30) comportant un bras supérieur (31) et un bras inférieur (35) relié à celui-ci par une charnière, le bras supérieur (31) du bras articulé (30) étant articulé au cadre portique (2) dans la zone en toiture du soufflet (5) et le bras inférieur (35), sur le cadre flexible (3), et un dispositif de déploiement (51, 55) du soufflet (5) étant prévu, le bras inférieur (35) étant articulé sur le cadre flexible (3),
**caractérisé en ce**
**que** le dispositif de déploiement comprend un premier et un deuxième ensemble cylindre-piston (51, 55) destiné à déployer le bras articulé (30), le premier ensemble cylindre-piston (51) servant à déployer le bras inférieur (35) par rapport au bras supérieur (31), le premier ensemble cylindre-piston (51) étant articulé par l'une de ses extrémités sur le bras supérieur (31) et par son autre extrémité sur le bras inférieur (35), le deuxième ensemble cylindre-piston (55) servant à faire pivoter le bras supérieur (35) vers l'extérieur.

2. Joint selon la revendication 1,
**caractérisé en ce**
**que** le cadre flexible (3) est réalisé en matière plastique renforcée en fibres de verre.

3. Joint selon la revendication 1,
**caractérisé en ce**
**que** le deuxième ensemble cylindre-piston (55) est articulé sur le cadre portique (2) par l'une de ses extrémités et sur le bras supérieur (31) par son autre extrémité.

4. Joint selon la revendication 1,
**caractérisé en ce**
**que** le bras inférieur (35) comporte un membre d'extrémité (36) qui est fixé sur le bras inférieur (35) en formant un angle avec celui-ci.

5. Joint selon la revendication 1,
**caractérisé en ce**
**que** l'arbre (40) mobile en rotation comporte un dispositif d'enroulement (41) pour le moyen de traction (49), p. ex. une sangle.
